(19) Europäisches Patentamt
European Patent Office
Office européen des brevets

(11) **EP 4 691 870 A1**

(12) **EUROPEAN PATENT APPLICATION**
published in accordance with Art. 153(4) EPC

(43) Date of publication:
**11.02.2026 Bulletin 2026/07**

(21) Application number: **24777517.4**

(22) Date of filing: **02.02.2024**

(51) International Patent Classification (IPC):
**B60W 20/20** (2016.01)    **B60W 20/40** (2016.01)

(52) Cooperative Patent Classification (CPC):
Y02T 10/62

(86) International application number:
**PCT/CN2024/075602**

(87) International publication number:
**WO 2024/198723 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **30.03.2023  CN 202310340353**

(71) Applicant: **Chongqing Changan Automobile Co.,
Ltd.
Chongqing 400023 (CN)**

(72) Inventors:
• **LIU, Changpeng
  Chongqing 400023 (CN)**
• **LI, Mengna
  Chongqing 400023 (CN)**
• **YE, Minghui
  Chongqing 400023 (CN)**
• **GAO, Haibo
  Chongqing 400023 (CN)**

(74) Representative: **Barker Brettell LLP
100 Hagley Road
Edgbaston
Birmingham B16 8QQ (GB)**

(54) **CONTROL METHOD AND APPARATUS FOR HYBRID VEHICLE, VEHICLE, AND MEDIUM**

(57)    A control method for a hybrid vehicle, the method includes when the hybrid vehicle operates in a pure electric mode, acquiring a first temperature value for an electric power source of the hybrid vehicle and a second temperature value for a current ambient environment; determining a first battery energy value corresponding to the first temperature value and a second battery energy value corresponding to the second temperature value from a first preset relationship; where the first preset relationship is a minimum remaining battery energy value set for the hybrid vehicle that the electric power source needs to have under different ambient environment temperatures/different electric power source temperatures; and taking a minimum battery energy value of the first battery energy value and the second battery energy value as an exit battery energy value of the pure electric mode, and controlling the hybrid vehicle to exit the pure electric mode and activate a hybrid mode when it is detected that an actual remaining battery energy value of the electric power source is not higher than the exit battery energy value. Also provided are a control apparatus for a hybrid vehicle, a vehicle, and a medium. The control method of the present application realizes reserving the battery energy of the electric power source for different ambient environment temperatures/different electric power source temperatures, so that a user may drive the vehicle in the pure electric mode for a longer time, and sufficient battery energy currently required may also be reserved for the vehicle.

FIG. 1

## Description

This application claims priority to Chinese Patent Application No. 202310340353.5, filed with the China National Intellectual Property Administration on March 30, 2023, and entitled "CONTROL METHOD AND APPARATUS FOR HYBRID VEHICLE, VEHICLE AND MEDIUM", the entire content of which is incorporated in this application by reference.

## TECHNICAL FIELD

The present application relates to the field of hybrid vehicle control technology and, in particular, to a control method and apparatus for a hybrid vehicle, a vehicle and a medium.

## BACKGROUND

Hybrid vehicles combine the advantages of traditional fuel vehicles and electric vehicles, and they may drive on fuel power or pure electric power. An operation process of driving on pure electric power may be referred to as a battery energy consumption stage (hereinafter referred to as a pure electric mode), and an operation process of driving on fuel power may be referred to as a battery energy maintenance stage, that is, no battery energy is consumed in this stage (hereinafter referred to as a hybrid mode).

When the hybrid vehicle is in a fully charged state and a user selects the pure electric mode, the hybrid vehicle will drive on pure electric power; with continuous use, the battery energy of the hybrid vehicle will gradually decrease to a certain value. At this time, the mode of the hybrid vehicle will automatically enter the hybrid mode to reserve a certain amount of battery energy and ensure the electrical demand of the hybrid vehicle.

In practical applications, if too much battery energy is reserved, users will only be able to use the pure electric mode for a short period of time; and if too little battery energy is reserved, the electrical demand of the hybrid vehicle cannot be met. Therefore, how to accurately determine the battery energy that needs to be reserved has become one of the urgent problems to be solved in the field of hybrid vehicle control.

## SUMMARY

In view of the above problems, a control method and apparatus for a hybrid vehicle, a vehicle and a medium are proposed to overcome or at least partially solve the above problems, including:

A control method for a hybrid vehicle, the hybrid vehicle is equipped with a pure electric mode and a hybrid mode, and the method includes:

acquiring, when the hybrid vehicle operates in a pure electric mode, a first temperature value for an electric power source of the hybrid vehicle and a second temperature value for a current ambient environment;

determining a first battery energy value corresponding to the first temperature value and a second battery energy value corresponding to the second temperature value from a first preset relationship; where the first preset relationship is a minimum remaining battery energy value set for the hybrid vehicle that the electric power source needs to have under different ambient environment temperatures/different electric power source temperatures; and

taking a minimum battery energy value of the first battery energy value and the second battery energy value as an exit battery energy value of the pure electric mode, and controlling the hybrid vehicle to exit the pure electric mode and activate the hybrid mode when it is detected that an actual remaining battery energy value of the electric power source is not higher than the exit battery energy value.

Optionally, the method further includes:

determining a target temperature interval to which the second temperature value belongs;

determining a third temperature value from the first temperature value and the second temperature value according to the target temperature interval;

determining a third battery energy value corresponding to the third temperature value from a second preset relationship; where the second preset relationship is a correspondence relationship between a temperature value and a battery energy value;

when determining the exit battery energy value, the method further includes:

taking a greater battery energy value of the minimum battery energy value and the third battery energy value as the exit battery energy value of the pure electric mode.

Optionally, the determining the third temperature value from the first temperature value and the second temperature value according to the target temperature interval includes:

taking, when the target temperature interval is a first temperature interval, a smaller temperature value of the first temperature value and the second temperature value as the third temperature value;

taking, when the target temperature interval is a second temperature interval, a greater temperature value of the first temperature value and the second temperature value as the third temperature value; and

taking, when the target temperature interval is a third temperature interval, the second temperature value as the third temperature value;

where the first temperature interval is less than a first preset temperature value, the second temperature interval is greater than a second preset temperature value, and the third temperature interval is between the first preset temperature value and the second preset temperature value; and the first preset temperature value is less than the second preset temperature value.

Optionally, the determining the third battery energy value corresponding to the third temperature value from the second preset relationship includes:

determining a fourth battery energy value corresponding to the third temperature value from the second preset relationship; and
determining the third battery energy value according to the fourth battery energy value and a preset offset value.

Optionally, the second preset relationship includes the following parts:

a temperature value is less than a third preset temperature value, and in the second preset relationship, a battery energy value corresponding to the temperature value increases as the temperature value decreases;
the temperature value is greater than a fourth preset temperature value, and in the second preset relationship, the battery energy value corresponding to the temperature value increases as the temperature value increases; and
the temperature value is between the third preset temperature value and the fourth preset temperature value, and in the second preset relationship, the battery energy value corresponding to the temperature value is a unique preset fixed value; and
where the third preset temperature value is less than the fourth preset temperature value.

Optionally, the taking the greater battery energy value of the minimum battery energy value and the third battery energy value as the exit battery energy value of the pure electric mode includes:

determining whether the first battery energy value is greater than the second battery energy value;
taking, when the first battery energy value is greater than the second battery energy value, a greater battery energy value of the second battery energy value and the third battery energy value as the exit battery energy value of the pure electric mode;
taking, when the first battery energy value is not greater than the second battery energy value, a greater battery energy value of the first battery energy value and the third battery energy value as the exit battery energy value in the pure electric mode.

Optionally, the first preset relationship includes a first sub-preset relationship and a second sub-preset relationship;

the first sub-preset relationship is a minimum remaining battery energy value set for the hybrid vehicle that the electric power source needs to have under different electric power source temperatures; the second sub-preset relationship is a minimum remaining battery energy value set for the hybrid vehicle that the electric power source needs to have under different ambient environment temperatures; where under the same temperature value, a corresponding battery energy value in the second sub-preset relationship is less than a corresponding battery energy value in the first sub-preset relationship.

Optionally, the hybrid vehicle is equipped with a first temperature sensor for the electric power source and a first temperature sensor for ambient environment around the vehicle;
the acquiring the first temperature value for the electric power source of the hybrid vehicle and the second temperature value for the current ambient environment includes:
acquiring the first temperature value measured for the electric power source from the first temperature sensor, and acquiring the second temperature value for the current ambient environment from the second temperature sensor.
Optionally, the hybrid vehicle is equipped with a thermal power source, and the controlling the hybrid vehicle to exit the pure electric mode and activate the hybrid mode includes:
activating the thermal power source.
The present application further provides a control apparatus for a hybrid vehicle, where the hybrid vehicle is equipped with a pure electric mode and a hybrid mode, and the apparatus includes:

a temperature acquisition module, configured to acquire a first temperature value for an electric power source of the hybrid vehicle and a second temperature value for a current ambient environment when the hybrid vehicle operates in a pure electric mode;
a first battery energy determination module, configured to determine a first battery energy value corresponding to the first temperature value and a second battery energy value corresponding to the second temperature value from a first preset relationship; where the first preset relationship is a minimum remaining battery energy value set for the hybrid vehicle that the electric power source needs to have under different ambient environment temperatures/different electric power source temperatures; and
a control module, configured to take a minimum battery energy value of the first battery energy value and the second battery energy value as an exit battery energy value of the pure electric mode, and control the hybrid vehicle to exit the pure electric mode and activate the hybrid mode when it is detected that an actual remaining battery energy value of the electric power source is not higher than the exit battery energy value.

Optionally, the apparatus further includes:

a second battery energy value determination module, configured to determine a target temperature interval to which the second temperature value belongs; determine a third temperature value from the first temperature value and the second temperature value according to the target temperature interval; and determine a third battery energy value corresponding to the third temperature value from a second preset relationship; where the second preset relationship is a correspondence relationship between a temperature value and a battery energy value;

the control module is further configured to, when determining the exit battery energy value, take a greater battery energy value of the minimum battery energy value and the third battery energy value as the exit battery energy value of the pure electric mode.

Optionally, the second battery energy value determination module is configured to: take a smaller temperature value of the first temperature value and the second temperature value as the third temperature value when the target temperature interval is a first temperature interval; take a greater temperature value of the first temperature value and the second temperature value as the third temperature value when the target temperature interval is a second temperature interval; and take the second temperature value as the third temperature value when the target temperature interval is a third temperature interval; where the first temperature interval is less than a first preset temperature value, the second temperature interval is greater than a second preset temperature value, and the third temperature interval is between the first preset temperature value and the second preset temperature value; and the first preset temperature value is less than the second preset temperature value.

Optionally, the second battery energy value determination module is configured to determine a fourth battery energy value corresponding to the third temperature value from the second preset relationship, and determine the third battery energy value according to the fourth battery energy value and a preset offset value.

Optionally, the second preset relationship includes the following parts:

a temperature value is less than a third preset temperature value, and in the second preset relationship, a battery energy value corresponding to the temperature value increases as the temperature value decreases;

the temperature value is greater than a fourth preset temperature value, and in the second preset relationship, the battery energy value corresponding to the temperature value increases as the temperature value increases; and

the temperature value is between the third preset temperature value and the fourth preset temperature value, and in the second preset relationship, the battery energy value corresponding to the temperature value is a unique preset fixed value;

where the third preset temperature value is less than the fourth preset temperature value.

Optionally, the control module is configured to: determine whether the first battery energy value is greater than the second battery energy value; take a greater battery energy value of the second battery energy value and the third battery energy value as the exit battery energy value of the pure electric mode when the first battery energy value is greater than the second battery energy value; take a greater battery energy value of the first battery energy value and the third battery energy value as the exit battery energy value of the pure electric mode when the first battery energy value is not greater than the second battery energy value.

Optionally, the first preset relationship includes a first sub-preset relationship and a second sub-preset relationship;

the first sub-preset relationship is set for the hybrid vehicle and is a minimum remaining battery energy value that the electric power source needs to have under different electric power source temperatures; the second sub-preset relationship is set for the hybrid vehicle and is a minimum remaining battery energy value that the electric power source needs to have under different ambient environment temperatures;

where under the same temperature value, a corresponding battery energy value in the second sub-preset relationship is less than a corresponding battery energy value in the first sub-preset relationship.

Optionally, the hybrid vehicle is equipped with a first temperature sensor for the electric power source and a first temperature sensor for ambient environment around the vehicle; and

the temperature acquisition module is configured to acquire the first temperature value measured for the electric power source from the first temperature sensor, and to acquire the second temperature value for the current ambient environment from the second temperature sensor.

Optionally, the control module is configured to activate the thermal power source.

The present application further provides a vehicle including a processor, a memory, and a computer program stored in the memory and capable of running on the processor, and when the computer program is executed by the processor, the control method for the hybrid vehicle as described above is implemented.

The present application further provides a computer-readable storage medium, where the computer-readable storage medium stores a computer program, and when the computer program is executed by a processor, the control method for the hybrid vehicle as described above is implemented.

Beneficial effects of the present application are as follows.

In the present application, when the hybrid vehicle operates in the pure electric mode, the first temperature value for the electric power source of the hybrid vehicle and the second temperature value for the current ambient environment are acquired; the first battery energy value corresponding to the first temperature value and the second battery energy value corresponding to the second temperature value are determined from the first preset relationship; the first preset relationship is the minimum remaining battery energy value set for the hybrid vehicle that the electric power source needs to have under different ambient environment temperatures/different electric power source temperatures; and the minimum battery energy value of the first battery energy value and the second battery energy value is taken as the exit battery energy value of the pure electric mode, and the hybrid vehicle is controlled to exit the pure electric mode and activate the hybrid mode when it is detected that the actual remaining battery energy value of the electric power source is not higher than the exit battery energy value. The battery energy that the electric power source needs to reserve is accurately determined by comprehensively considering the temperature of the electric power source of the hybrid vehicle and the ambient environment temperature, so that it is realized that the battery energy of the electric power source is reserved for different ambient environment temperatures/different electric power source temperatures, the user may drive the vehicle in the pure electric mode for a longer time and sufficient battery energy currently required may also be reserved for the vehicle.

## BRIEF DESCRIPTION OF DRAWINGS

FIG. 1 is a flowchart of steps of a control method for a hybrid vehicle according to an embodiment of the present application.
FIG. 2 is a flowchart of steps of another control method for a hybrid vehicle according to an embodiment of the present application.
FIG. 3 is a flowchart of steps for determining a third temperature value according to an embodiment of the present application.
FIG. 4 is a schematic diagram of a second preset relationship according to an embodiment of the present application.
FIG. 5 is a flowchart of steps for determining an exit battery energy value according to an embodiment of the present application.
FIG. 6 is a structural diagram of a control apparatus for a hybrid vehicle according to an embodiment of the present application.

## DESCRIPTION OF EMBODIMENTS

In order to make the above purposes, features and advantages of the present application more obvious and easier to understand, the present application will be further described in detail in combination with the drawings and the specific implementations. Obviously, the described embodiments are part of the embodiments of the present application, but not all of them. Based on the embodiments in the present application, all other embodiments acquired by those ordinarily skilled in the art without creative work shall fall within the protection scope of the present application.

In the embodiments of the present application, an hybrid vehicle may be equipped with an electric power source and a thermal power source; when the vehicle is only suitable for driving the vehicle by the electric power source, the vehicle is in a pure electric mode; and when the vehicle is only suitable for driving the vehicle by the thermal power source (or using both the electric power source and the thermal power source), the vehicle is in a hybrid mode.

When the hybrid vehicle operates in the pure electric mode, it will continuously consume battery energy of the electric power source; when the battery energy of the electric power source reaches a preset value, the hybrid vehicle can automatically switch from the pure electric mode to the hybrid mode, so as to reserve a certain amount of battery energy required by the hybrid vehicle in the electric power source, for example, for starting an engine of the thermal power source in a low-temperature environment and maintaining an operation of the vehicle air conditioner.

In order to accurately determine the battery energy that needs to be reserved, in the embodiments of the present application, the battery energy that needs to be reserved is determined by comprehensively considering a temperature of the electric power source of the hybrid vehicle and an ambient environment temperature, thereby reserving the battery energy of the electric power source for different ambient environment temperatures/different electric power source temperatures, so that a user may drive the vehicle in the pure electric mode for a longer period of time, and sufficient battery energy currently required may be reserved for the vehicle.

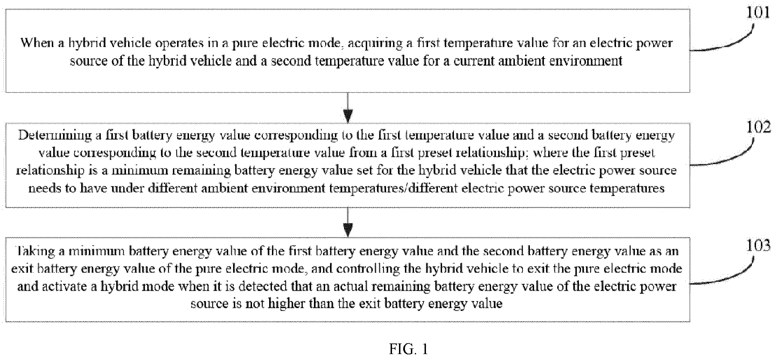

Referring to FIG. 1, a flowchart of steps of a control method for a hybrid vehicle according to an embodiment of the present application is shown, and the following steps may be included:

step 101: when the hybrid vehicle operates in a pure electric mode, acquiring a first temperature value for an electric power source of the hybrid vehicle and a second temperature value for a current ambient environment.

In practical applications, the first temperature value collected for the electric power source of the hybrid vehicle and the second temperature value collected for the current ambient environment may be acquired when the hybrid vehicle operates in the pure electric mode.

As an example, the hybrid vehicle may be equipped with a first temperature sensor for the electric power source and a first temperature sensor for ambient environment around the vehicle; when collecting the first temperature value and the second temperature value, it may be implemented by the following method:

acquiring the first temperature value measured for the electric power source from the first temperature sensor, and acquiring the second temperature value for the current ambient environment from the second temperature sensor.

In practical applications, the first temperature sensor for the electric power source and the first temperature sensor for the ambient environment around the vehicle may be disposed in advance in the hybrid vehicle; then, when the hybrid vehicle operates in the pure electric mode, the first temperature value measured for the electric power source of the hybrid vehicle may be acquired from the first temperature sensor, and the second temperature value for the current ambient environment around the vehicle may be acquired from the second temperature sensor.

As an example, the first temperature value may be acquired from the first temperature sensor in real time, and the second temperature value may be acquired from the second temperature sensor in real time; the first temperature value may also be acquired from the first temperature sensor at a preset time interval, and the second temperature value may be acquired from the second temperature sensor at a preset time interval. It is not limited in the embodiment of the present application.

Step 102: determining a first battery energy value corresponding to the first temperature value and a second battery energy value corresponding to the second temperature value from a first preset relationship; where the first preset relationship is a minimum remaining battery energy value set for the hybrid vehicle that the electric power source needs to have under different ambient environment temperatures/different electric power source temperatures.

After the first temperature value is acquired, the first battery energy value corresponding to the first temperature value may be determined from the first preset relationship; and the first battery energy value may refer to the minimum remaining battery energy value that the electric power source needs to have when the temperature of the electric power source is the first temperature value.

At the same time, after the second temperature value is acquired, the second battery energy value corresponding to the second temperature value may also be determined from the first preset relationship; and the second battery energy value may refer to the minimum remaining battery energy value that the electric power source needs to have when the current ambient environment temperature is the second temperature value.

Thus, based on the first preset relationship, the first temperature value and the second temperature value, the minimum remaining battery energy required to be reserved by the electric power source when the hybrid vehicle is in different conditions can be determined; the minimum remaining battery energy may refer to meeting the battery energy demand of the hybrid vehicle in different conditions.

In practical applications, the first preset relationship may be preset for the hybrid vehicle; the first preset relationship may be the minimum remaining battery energy value that the electric power source needs to have corresponding to different ambient environments, and the minimum remaining battery energy value that the electric power source needs to have corresponding to different electric power source temperatures.

Step 103: taking a minimum battery energy value of the first battery energy value and the second battery energy value as an exit battery energy value of the pure electric mode, and controlling the hybrid vehicle to exit the pure electric mode and activate the hybrid mode when it is detected that an actual remaining battery energy value of the electric power source is not higher than the exit battery energy value.

After the first battery energy value and the second battery energy value are determined, the first battery energy value and the second battery energy value may be compared, and the minimum battery energy value of the first battery energy value and the second battery energy value may be taken as the exit battery energy value of the pure electric mode.

After the exit battery energy value is determined, the actual remaining battery energy value of the electric power source may be detected, and the actual remaining battery energy value may be compared with the exit battery energy value.

If the actual remaining battery energy value is greater than the exit battery energy value, the hybrid vehicle may continue to be driven in the pure electric mode until a mode switching operation is received from a user, or when the actual remaining battery energy value is not greater than the exit battery energy value.

If the actual remaining battery energy value is not greater than the exit battery energy value, the hybrid vehicle may be controlled to exit the pure electric mode and activate the hybrid mode; thus, the hybrid vehicle will no longer be powered for driving solely by the electric power source, but by a thermal power source (or the thermal power source and the electric power source); furthermore, that can meet the battery energy demand of the hybrid vehicle under the current condition (i.e., the current ambient environment temperature/the current electric power source temperature) is reserved in the electric power source for the hybrid vehicle.

For example, when the current ambient environment temperature is high, less battery energy may be reserved, so that the user may use the pure electric mode for a longer time. When the current ambient environment temperature is low, more battery energy may be reserved, thereby ensuring that the hybrid vehicle can be started based on the electric power source at the next startup.

As an example, the hybrid vehicle may be equipped with a thermal power source, and the thermal power source may be activated when the hybrid vehicle is controlled to exit the pure electric mode and activate the hybrid mode; depending on actual conditions, the electric power source may also be turned off when exiting the pure electric mode and activating the hybrid mode, which is not limited in the embodiment of the present application.

In the embodiment of the present application, when the hybrid vehicle operates in the pure electric mode, the first temperature value for the electric power source of the hybrid vehicle and the second temperature value for the current ambient environment are acquired; the first battery energy value corresponding to the first temperature value and the second battery energy value corresponding to the second temperature value are determined from the first preset relationship; the first preset relationship is the minimum remaining battery energy value set for the hybrid vehicle that the electric power source needs to have under different ambient environment temperatures/different electric power source temperatures; the minimum battery energy value of the first battery energy value and the second battery energy value is taken as the exit battery energy value of the pure electric mode, and when it is detected that the actual remaining battery energy value of the electric power source is not higher than the exit battery energy value, the hybrid vehicle is controlled to exit the pure electric mode and activate the hybrid mode. By comprehensively considering the electric power source temperature of the hybrid vehicle and the ambient environment temperature, the battery energy required to be reserved for the electric power source is accurately determined, so that it is realized that the battery energy of the electric power source is reserved for different ambient environment temperatures/different electric power source temperatures, the user may drive the vehicle in the pure electric mode for a longer time, and sufficient battery energy currently required may also be reserved for the vehicle.

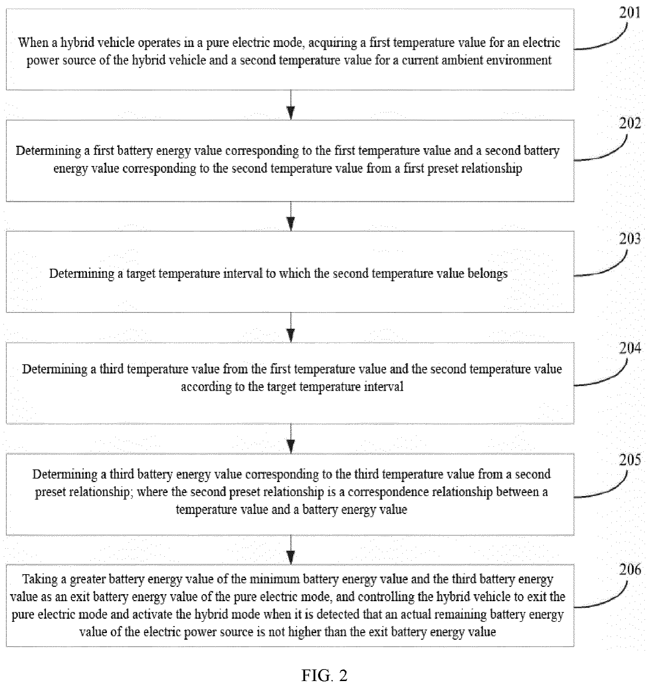

Referring to FIG. 2, a flowchart of steps of another control method for a hybrid vehicle according to an embodiment of the present application is shown, and the following steps may be included:

step 201: when a hybrid vehicle operates in a pure electric mode, acquiring a first temperature value for an electric power source of the hybrid vehicle and a second temperature value for a current ambient environment.

In practical applications, a first temperature sensor for the electric power source and a first temperature sensor for the ambient environment around the vehicle may be disposed in advance; then, when the hybrid vehicle operates in the pure electric mode, the first temperature value measured for the electric power source of the hybrid vehicle is acquired from the first temperature sensor, and the second temperature value for the current ambient environment around the vehicle is acquired from the second temperature sensor.

Step 202: determining a first battery energy value corresponding to the first temperature value and a second battery energy value corresponding to the second temperature value from a first preset relationship.

After the first temperature value is acquired, the first battery energy value corresponding to the first temperature value may be determined from the first preset relationship. At the same time, after the second temperature value is acquired, the second battery energy value corresponding to the second temperature value may also be determined from the first preset relationship.

As an example, the first preset relationship includes a first sub-preset relationship and a second sub-preset relationship; the first sub-preset relationship is a minimum remaining battery energy value set for the hybrid vehicle that the electric power source needs to have under different electric power source temperatures; the second sub-preset relationship is a minimum remaining battery energy value set for the hybrid vehicle that the electric power source needs to have under different ambient environment temperatures; where under the same temperature value, a corresponding battery energy value in the second sub-preset relationship is less than a corresponding battery energy value in the first sub-preset relationship.

In practical applications, the first preset relationship may include the first sub-preset relationship set for the electric power source, and the second sub-preset relationship set for the ambient environment.

The first sub-preset relationship is the minimum remaining battery energy value that the electric power source needs to have, set for the hybrid vehicle, in order to meet the battery energy demand of the hybrid vehicle when the electric power source of the hybrid vehicle is at different temperatures.

The second sub-preset relationship is the minimum remaining battery energy value that the electric power source needs to have, set for the hybrid vehicle, in order to meet the battery energy demand of the hybrid vehicle when the hybrid vehicle is in the ambient environments of different temperatures.

It should be noted that, under the same temperature value, a corresponding battery energy value in the second sub-preset relationship may be set to be less than a corresponding battery energy value in the first sub-preset relationship. For example, if the temperatures of the electric power source and the ambient environment are both 10 °C, the battery energy value set in the second sub-preset relationship may be less than the battery energy value set in the first sub-preset relationship, which is not limited in the embodiment of the present application.

Step 203: determining a target temperature interval to which the second temperature value belongs.

After the second temperature value is determined, the target temperature interval to which the second temperature value belongs may be determined. The target temperature interval may be a first temperature interval, a second temperature interval, or a third temperature interval.

As an example, the first temperature interval is less than the first preset temperature value, the second temperature interval is greater than the second preset temperature value, and the third temperature interval is between the first preset temperature value and the second preset temperature value; and the first preset temperature value is less than the second preset temperature value.

Specifically, a temperature value in the first temperature interval is less than the first preset temperature value, a temperature value in the second temperature interval is greater than the second preset temperature value, and a temperature value in the third temperature interval is between the first preset temperature value and the second preset temperature value.

For example, if the first preset temperature value is -10°C, the second preset temperature value is 35°C, and the second temperature value is 30°C, the second temperature value is in the third temperature interval.

Step 204: determining a third temperature value from the first temperature value and the second temperature value according to the target temperature interval.

After the target temperature interval to which the second temperature value belongs is determined, a temperature value may be determined from the first temperature value and the second temperature value according to the target temperature interval to which the second temperature value belongs and taken as the third temperature value.

In an embodiment of the present application, the third temperature value may be determined by the following sub-steps:
Sub-step 11: when the target temperature interval is the first temperature interval, a smaller temperature value of the first temperature value and the second temperature value is taken as the third temperature value.

If the target temperature interval to which the second temperature value belongs is the first temperature interval, a smaller temperature value of the first temperature value and the second temperature value may be taken as the third temperature value.

For example, if the first temperature value is -11°C and the second temperature value is -12°C, the second temperature value may be taken as the third temperature value.

Sub-step 12: when the target temperature interval is the second temperature interval, taking a greater temperature value of the first temperature value and the second temperature value as the third temperature value.

If the target temperature interval to which the second temperature value belongs is the second temperature interval, the greater temperature value of the first temperature value and the second temperature value may be taken as the third temperature value.

For example, if the first temperature value is 12°C and the second temperature value is 11°C, the first temperature value may be taken as the third temperature value.

Sub-step 13: when the target temperature interval is the third temperature interval, taking the second temperature value as the third temperature value.

If the target temperature interval to which the second temperature value belongs is the third temperature interval, the first temperature value may be directly taken as the third temperature value.

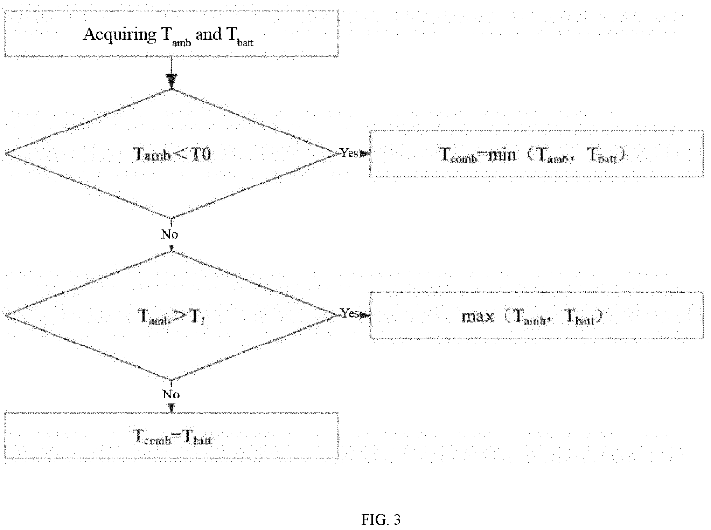

As shown in FIG. 3, T amb (i.e., the second temperature value mentioned above) and T batt (i.e., the first temperature value mentioned above) may be acquired first.

Then, the third temperature value is determined based on the target temperature interval to which T amb belongs:

$$T\ comb = \min(T\ amb, T\ batt) \quad T\ amb < T\ 0;$$

$$T\ batt \quad T\ 1 \geq T\ amb \geq T\ 0;$$

$$\max(T\ amb, T\ batt) \quad T\ amb > T\ 1.$$

T 0 is the first preset temperature value mentioned above, and T 1 is the second preset temperature value mentioned above.

Specifically, it can be determined whether T amb is less than the calibration value T 0. If a determination result is yes, a calculation formula of T comb is T comb =min(T amb, T batt); if the determination result is no, it proceeds to the next step of determination.

It is determined whether T amb is greater than the calibration value T 1. If the determination result is yes, the calculation formula of T comb is T comb = max(T amb, T batt); if the determination result is no, the calculation formula of T comb is T comb = T batt.

Based on the above calculation method, assuming that T 0 is -10°C and T 1 is 35°C; when T amb is less than -10°C, a lower one of T amb and T batt is used to set the third battery energy value; when Tamb is higher than 35°C, a higher one of Tamb and Tbatt is used to set the third battery energy value; and when Tamb is within a range of (-10°C, 35°C), Tbatt is used to set the third battery energy .

Step 205: determining a third battery energy value corresponding to the third temperature value from a second preset relationship; where the second preset relationship is a correspondence relationship between a temperature value and a battery energy value.

After the third temperature value is determined, a battery energy value corresponding to the third temperature value may be determined from the preset second preset relationship and taken as the third battery energy value.

As an example, the second preset relationship may be a correspondence relationship between the temperature value and the battery energy value; specifically, the battery energy value may be set as a function of the temperature value, and the functional relationship may be implemented by a one-dimensional calibration table; in the calibration table, a horizontal axis dimension may be the third temperature value, and a vertical axis dimension may be the third battery energy value. The second preset relationship may be set according to actual needs, which is not limited in the embodiment of the present application.

In an embodiment of the present application, the second preset relationship may include the following three parts:

a first part: the temperature value is less than the third preset temperature value, and in the second preset relationship, the battery energy value corresponding to the temperature value increases as the temperature value decreases;
a second part: the temperature value is greater than a fourth preset temperature value, and in the second preset relationship, the battery energy value corresponding to the temperature value increases as the temperature value increases; where the third preset temperature value is less than the fourth preset temperature value; and
a third part: the temperature value is between the third preset temperature value and the fourth preset temperature value, and in the second preset relationship, the battery energy value corresponding to the temperature value is a unique preset fixed value.

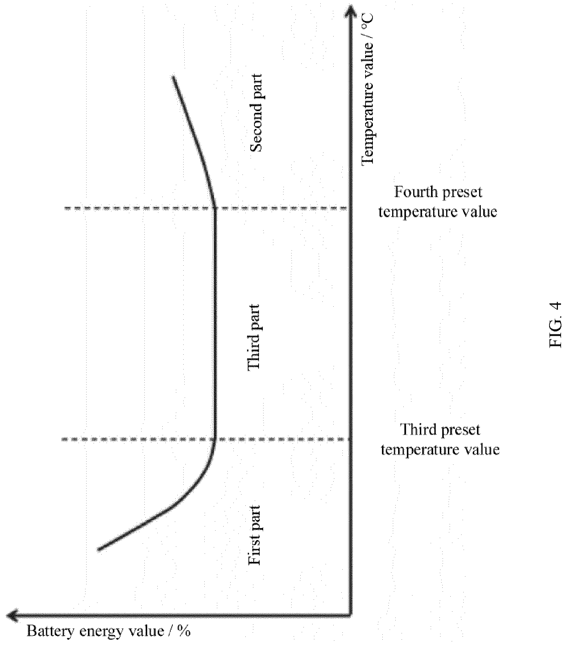

Referring to FIG. 4, a schematic diagram of the second relationship according to an embodiment of the present application is shown; where in the first part, the temperature value is less than the third preset temperature value, and the battery energy value in the first part increases as the temperature decreases, thereby meeting the increase in the battery energy consumption caused by the battery performance attenuation in the electric power source and air conditioning heating under low temperatures.

In the second part, the temperature value is greater than the fourth preset temperature value, and the battery energy value in the second part increases as the temperature increases to meet the increase in the battery energy consumption caused by the use of the air conditioner in the vehicle under high temperatures.

In the third part, the temperature value is between the third preset temperature value and the fourth preset temperature value, and in the second preset relationship, the battery energy value corresponding to the temperature value is a unique preset fixed value, and the unique preset fixed value may be set according to actual conditions, which is not limited in the embodiment of the present application.

As an example, the first preset temperature value and the third preset temperature value may be the same temperature value, and the second preset temperature value and the fourth preset temperature value may be the same temperature value, which is not limited in the embodiment of the present application.

In an embodiment of the present application, the third battery energy value may be determined by the following sub-steps:

Sub-step 21: determining a fourth battery energy value corresponding to the third temperature value from the second preset relationship.

After the third temperature value is determined, it may be determined first that a fourth temperature value corresponding to the third temperature value is found from the second preset relationship.

Sub-step 22: determining a third battery energy value according to the fourth battery energy value and a preset offset value.

Then, the third battery energy value may be calculated according to the fourth battery energy value and a preset offset value; specifically, a sum of the third battery energy value and the preset offset value may be taken as the third battery energy value.

For example, if the fourth battery energy value is B and the preset offset value is Offset, (B+Offset) may be taken as the third battery energy value.

The preset offset value may be a fixed value or a value that varies with the temperature; a setting range of the preset offset value may be 1 % to 3 %, which is not limited in the embodiment of the present application.

Step 206: taking a greater battery energy value of the minimum battery energy value and the third battery energy value as the exit battery energy value of the pure electric mode, and controlling the hybrid vehicle to exit the pure electric mode and activate the hybrid mode when it is detected that the actual remaining battery energy value of the electric power source is not higher than the exit battery energy value.

In practical applications, the smaller one of the first battery energy value and the second battery energy value is taken to allow the hybrid vehicle to obtain a longer pure electric driving range, and to control the electric power source to release more battery energy when the temperature of the electric power source and the ambient environment temperature differ greatly (especially when the temperature of the electric power source is higher than the ambient environment temperature).

After taking the smaller value, the greater battery energy value is taken from the minimum battery energy value and the third battery energy value acquired above as the exit battery energy value of the pure electric mode, thus avoiding the problem that the vehicle may not be started normally when it is started again after being left stationary in an extremely low temperature environment for a long time after operation.

For example: Exit battery energy value A=max(B+Offset, min(f(T amb), f(T batt))); where f(T amb) is the second battery energy value mentioned above, and f(T batt) is the first battery energy value mentioned above.

It should be noted that both A and B cannot be set too low, otherwise the hybrid vehicle may not be started normally when it is started again after being left stationary in an extremely low temperature environment for a long time.

After the exit battery energy value is determined, the actual remaining battery energy value of the electric power source may be detected, and the actual remaining battery energy value may be compared with the exit battery energy value.

If the actual remaining battery energy value is greater than the exit battery energy value, the hybrid vehicle may continue to be driven in the pure electric mode until a mode switching operation is received from the user, or when the actual remaining battery energy value is not greater than the exit battery energy value.

If the actual remaining battery energy value is not greater than the exit battery energy value, the hybrid vehicle may be controlled to exit the pure electric mode and activate the hybrid mode; thus, the hybrid vehicle will no longer be driven solely by the electric power source, but by a thermal power source (or the thermal power source and the electric power source); furthermore, that can meet the battery energy demand of the hybrid vehicle under the current condition (i.e., the current ambient environment temperature/the current electric power source temperature) is reserved in the electric power source for the hybrid vehicle

In an embodiment of the present application, when determining the exit battery energy value, it may be implemented through the following sub-steps:
Sub-step 31, determine whether the first battery energy value is greater than the second battery energy value.

First, the first battery energy value and the second battery energy value may be compared to determine whether the first battery energy value is greater than the second battery energy value.

Sub-step 32, when the first battery energy value is greater than the second battery energy value, a greater battery energy value of the second battery energy value and the third battery energy value is taken as the exit battery energy value of the pure electric mode.

Then, if the first battery energy value is greater than the second battery energy value, the second battery energy value and the third battery energy value may be compared, and a greater battery energy value may be taken as the exit battery energy value of the pure electric mode.

Sub-step 33, when the first battery energy value is not greater than the second battery energy value, a greater battery energy value of the first battery energy value and the third battery energy value is taken as the exit battery energy value of the pure electric mode.

If the first battery energy value is not greater than the second battery energy value, the first battery energy value and the third battery energy value may be compared, and the greater battery energy value may be taken as the exit battery energy value of the pure electric mode, which is not limited in the embodiment of the present application.

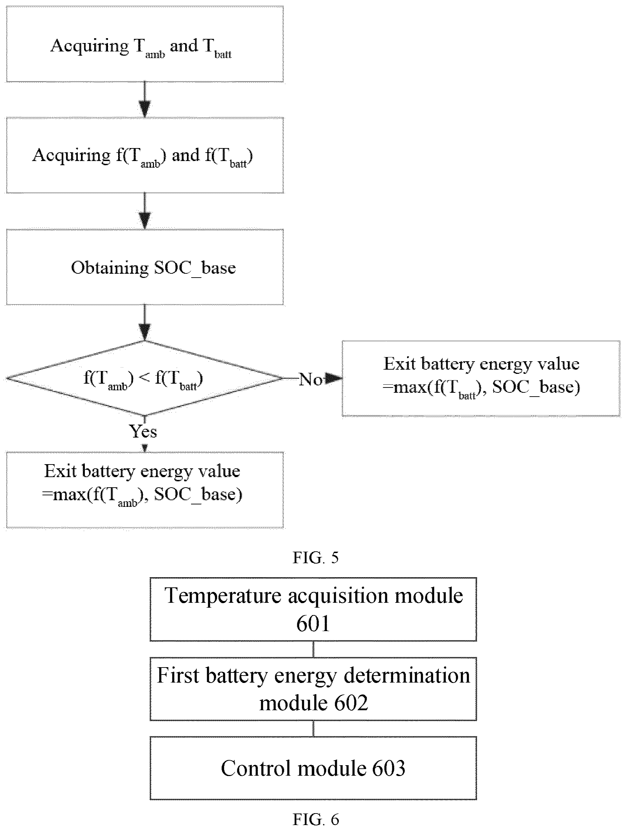

FIG. 5 shows a flowchart of steps for determining an exit battery energy value according to an embodiment of the present application.

S1: acquiring T amb and T batt.

S2: acquiring f(T amb) and f(T batt) according to T amb and T batt, respectively.

S3: acquiring SOC_base = (B+Offset) according to B and Offset; where this value is taken as a lower limit for the exit battery energy value of the pure electric mode, that is, it is necessary to ensure that a finally obtained exit battery energy value of the pure electric mode is not less than SOC_base.

S4: making a conditional judgment, f(T amb) <f(T batt),

S5: if the judgment condition of S4 is met, setting the exit battery energy value of the pure electric mode = max(f(T amb), SOC_base);

S6: if the judgment condition of S4 is not met, setting the exit battery energy value of the pure electric mode = max(f(T batt), SOC_base).

The use logic of the control method in three scenarios are assumed in the following, respectively, assuming that the temperature lookup table mentioned above is as shown in FIG. 1, and in the following examples, the battery energy values acquired through T amb and T batt are higher than SOC_base.

Table 1:

Temperature -20°C 0°C 10°C SOC_$T_{amb}$ 25% 20% 16% SOC_$T_{batt}$ 30% 24% 16%

Scenario 1: assuming that the vehicle is stationary for a long time, T amb and T batt may be approximately considered the same, that is, T amb≈T batt. Assuming that the temperatures at this time is -20 °C, the value for exiting the pure electric mode is set as 30%. This setting method may avoid the problem that the starting performance of the vehicle is restricted under extremely low temperatures when the vehicle is not charged in short-distance driving.

Scenario 2: assuming that the vehicle drives out of a warm garage in winter, at this time, T batt may be higher than T amb. Assuming that at this time, T batt = 10°C and T amb = 0°C, and the value for exiting the pure electric mode is set as 16% at this time. In this scenario, T batt may better reflect the real discharge capacity of the electric power source. This setting may extend driving distance of the hybrid vehicle in the pure electric mode at low temperatures.

Scenario 3: assuming that the vehicle drives into a warm garage in winter, at this time, T amb is higher than T batt. The setting method is similar to those mentioned above. At this time, the setting of the value for exiting the pure electric mode is based on T batt, and this method can release the true discharge capacity of the battery.

When T amb is extremely low (e.g., -20°C), at this time, SOC_base serves as a safety margin, which may prevent the remaining battery energy of the electric power source from being consumed to an extremely low level and affecting the driving experience or even the next startup.

By appropriately selecting different temperatures as a parameter selection benchmark for control variables under different temperatures, refined control of energy management in different scenarios is achieved, the scenario adaptability of the hybrid vehicle is improved, and the driving and riding experience of the user is improved.

In the present application, when the hybrid vehicle operates in the pure electric mode, the first temperature value for the electric power source of the hybrid vehicle and the second temperature value for the current ambient environment are acquired; the first battery energy value corresponding to the first temperature value and the second battery energy value corresponding to the second temperature value are determined from the first preset relationship; the target temperature interval to which the second temperature value belongs is determined; the third temperature value is determined from the first temperature value and the second temperature value according to the target temperature interval; the third battery energy value corresponding to the third temperature value is determined from the second preset relationship; the second preset relationship is a correspondence relationship between a temperature value and a battery energy value; the greater battery energy value of the minimum battery energy value and the third battery energy value is taken as the exit battery energy value of the pure electric mode, and when it is detected that the actual remaining battery energy value of the electric power source is not higher than the exit battery energy value, the hybrid vehicle is controlled to exit the pure electric mode and activate the hybrid mode. By setting the third battery energy value, it is possible to avoid the problem that when the hybrid vehicle is left stationary in an extremely low temperature environment for a long time, the hybrid vehicle may not be started normally upon restart due to insufficient reserved battery energy of the electric power source, so that the hybrid vehicle has stronger adaptability in the full temperature range. In addition, the embodiments of the present application not only ensure the performance of the vehicle in the full temperature range, but also extend the driving distance in the pure electric mode at low temperatures, meeting the needs of user groups with convenient charging access. At the same time, issues such as protection of the battery and start difficulty at extremely low temperatures are also considered.

It should be noted that, for the method embodiments, for the sake of simplicity, they are all expressed as a series of action combinations, but those skilled in the art should be aware that the embodiments of the present application are not limited by the described order of actions, because according to the embodiments of the present application, certain steps may be performed in other orders or simultaneously. Secondly, those skilled in the art should also be aware that the embodiments described in the specification are all preferred embodiments, and the actions involved are not necessarily required by the embodiments of the present application.

Referring to FIG. 6, a structural diagram of a control apparatus for a hybrid vehicle according to an embodiment of the present application is shown, and the following modules may be included:

a temperature acquisition module 601, configured to acquire a first temperature value for an electric power source of the hybrid vehicle and a second temperature value for a current ambient environment when the hybrid vehicle operates in a pure electric mode;

a first battery energy determination module 602, configured to determine a first battery energy value corresponding to the first temperature value and a second battery energy value corresponding to the second temperature value from a first preset relationship; where the first preset relationship is a minimum remaining battery energy value set for the hybrid vehicle that the electric power source needs to have under different ambient environment temperatures/different electric power source temperatures; and

a control module 603, configured to take a minimum battery energy value of the first battery energy value and the second battery energy value as an exit battery energy value of the pure electric mode, and control the hybrid vehicle to exit the pure electric mode and activate the hybrid mode when it is detected that an actual remaining battery energy value of the electric power source is not higher than the exit battery energy value.

In an embodiment of the present application, the apparatus further includes:

a second battery energy value determination module, configured to: determine a target temperature interval to which the second temperature value belongs; determine a third temperature value from the first temperature value and the second temperature value according to the target temperature interval; determine a third battery energy value corresponding to the third temperature value from a second preset relationship; where the second preset relationship is a correspondence relationship between a temperature value and a battery energy value;

the control module 603 is further configured to take a greater battery energy value of the minimum battery energy value and the third battery energy value as the exit battery energy value of the pure electric mode when determining the exit battery energy value.

In an embodiment of the present application, the second battery energy value determination module is configured to: take a smaller temperature value of the first temperature value and the second temperature value as the third temperature value when the target temperature interval is a first temperature interval; take a greater temperature value of the first temperature value and the second temperature value as the third temperature value when the target temperature interval is a second temperature interval; and take the second temperature value as the third temperature value when the target temperature interval is a third temperature interval; where the first temperature interval is less than a first preset temperature value, the second temperature interval is greater than a second preset temperature value, and the third temperature interval is between the first preset temperature value and the second preset temperature value; and the first preset temperature value is less than the second preset temperature value.

In an embodiment of the present application, the second battery energy value determination module is configured to determine a fourth battery energy value corresponding to the third temperature value from the second preset relationship, and determine the third battery energy value according to the fourth battery energy value and a preset offset value.

In an embodiment of the present application, the second preset relationship includes the following parts:

a temperature value is less than a third preset temperature value, and in the second preset relationship, a battery energy value corresponding to the temperature value increases as the temperature value decreases; the temperature value is greater than a fourth preset temperature value, and in the second preset relationship, the battery energy value corresponding to the temperature value increases as the temperature value increases; and

the temperature value is between the third preset temperature value and the fourth preset temperature value, and in the second preset relationship, the battery energy value corresponding to the temperature value is a unique preset fixed value;

where the third preset temperature value is less than the fourth preset temperature value.

In an embodiment of the present application, the control module 603 is configured to: determine whether the first battery energy value is greater than the second battery energy value; take a greater battery energy value of the second battery energy value and the third battery energy value as the exit battery energy value of the pure electric mode when the first battery energy value is greater than the second battery energy value; take a greater battery energy value of the first battery energy value and the third battery energy value as the exit battery energy value of the pure electric mode when the first battery energy value is not greater than the second battery energy value.

In an embodiment of the present application, the first preset relationship includes a first sub-preset relationship and a second sub-preset relationship;

the first sub-preset relationship is a minimum remaining battery energy value set for the hybrid vehicle that the electric power source needs to have under different electric power source temperatures; the second sub-preset relationship is a minimum remaining battery energy value set for the hybrid vehicle that the electric power source needs to have under different ambient environment temperatures; where under the same temperature value, a corresponding battery energy value in the second sub-preset relationship is smaller than a corresponding battery energy value in the first sub-preset relationship.

In an embodiment of the present application, the hybrid vehicle is equipped with a first temperature sensor for the electric power source and a first temperature sensor for the ambient environment around the vehicle;

the temperature acquisition module is configured to acquire the first temperature value measured for the electric power source from the first temperature sensor, and acquire the second temperature value for the current ambient environment from the second temperature sensor.

In an embodiment of the present application, the control module is configured to activate the thermal power source.

In the embodiment of the present application, when the hybrid vehicle operates in the pure electric mode, a first temperature value for the electric power source of the hybrid vehicle and a second temperature value for the current ambient environment are acquired; a first battery energy value corresponding to the first temperature value and a second battery energy value corresponding to the second temperature value are determined from the first preset relationship; the first preset relationship is the minimum remaining battery energy value set for the hybrid vehicle that the electric power source needs to have under different ambient environment temperatures/different electric power source temperatures; the minimum of the first battery energy value and the second battery energy value is taken as the exit battery energy value of the pure electric mode, and when it is detected that the actual remaining battery energy value of the electric power source is not higher than the exit battery energy value, the hybrid vehicle is controlled to exit the pure electric mode and activate the hybrid mode. By comprehensively considering the temperature of the electric power source of the hybrid vehicle and the ambient environment temperature, the battery energy that the electric power source needs to reserve is accurately determined, so that it is realized that the battery energy of the electric power source is reserved for different ambient environment temperatures/different electric power source temperatures, the user may drive the vehicle in the pure electric mode for a longer time, and sufficient battery energy currently required may be reserved for the vehicle.

The present application also provides a vehicle, including a processor, a memory, and a computer program stored in the memory and capable of running on the processor, and when the computer program is executed by the processor, the control method for the hybrid vehicle mentioned above is implemented.

The present application also provides a computer-readable storage medium, the computer-readable storage medium stores a computer program, and when the computer program is executed by a processor, the control method for the hybrid vehicle mentioned above is implemented.

As for the apparatus embodiments, since they are basically similar to the method embodiments, the description is relatively simple, and reference may be made to the partial description of the method embodiments for the relevant parts.

The various embodiments in this specification are described in a progressive manner, each embodiment focuses on the differences from other embodiments, and reference may be made to each other for the same or similar parts between the various embodiments.

It is to be understood by those skilled in the art that the embodiments of the present application may be provided as a method, an apparatus, or a computer program product. Therefore, the embodiments of the present application may adopt the form of a complete hardware embodiment, a complete software embodiment, or an embodiment combining software and hardware aspects. Moreover, the embodiments of the present application may adopt the form of a computer program product implemented on one or more computer-usable storage medium (including but not limited to a disk memory, a CD-ROM, an optical memory, etc.) containing computer-usable program codes.

The embodiments of the present application are described with reference to a flowchart and/or a block diagram of a method, a terminal device (system) and a computer program product according to the embodiments of the present application. It should be understood that each process in the flowchart and/or each block in the block diagram, and a combination of the process in the flowchart and/or the block in the block diagram may be realized by computer program instructions. These computer program instructions may be provided to a processor of a general-purpose computer, a special-purpose computer, an embedded processor or other programmable data processing terminal device to produce a machine, so that the instructions executed by the processor of the computer or other programmable data processing terminal device produce an apparatus for implementing functions specified in one or more processes in the flowchart and/or one or more blocks in the block diagram.

These computer program instructions may also be stored in a computer-readable memory that may direct a computer or other programmable data processing terminal apparatus to operate in a specific manner, so that the instructions stored in the computer-readable memory produce a manufactured product including an instruction apparatus that implements the functions specified in one or more processes in the flowchart and/or one or more blocks in the block diagram.

These computer program instructions may also be loaded onto a computer or other programmable data processing terminal apparatus so that a series of operating steps are executed on the computer or other programmable terminal apparatus to produce computer-implemented processing, so that the instructions executed on the computer or other programmable terminal apparatus provide steps for implementing the functions specified in one or more processes in a flowchart and/or one or more blocks in a block diagram.

Although the preferred embodiments of the present application have been described, those skilled in the art may make additional changes and modifications to these embodiments once they have learned the basic creative concept. Therefore, the appended claims are intended to be interpreted as including the preferred embodiments and all changes and modifications that fall within the scope of the embodiments of the present application.

Finally, it should be noted that, relational terms such as first and second, etc. herein are only used to distinguish one entity or operation from another entity or operation, and do not necessarily require or imply any such actual relationship or order between these entities or operations. Moreover, the terms "include", "comprise" or any other variants thereof are intended to cover non-exclusive inclusion, so that a process, method, object or terminal apparatus including a series of elements includes not only those elements, but also other elements not explicitly listed, or also includes elements inherent to such process, method, object or terminal apparatus. In the absence of further limitation, the elements defined by the sentence "include a (an)..." do not exclude the existence of other identical elements in the process, method, article or terminal apparatus including the elements.

The control method and apparatus for a hybrid vehicle, the vehicle and the medium are introduced in detail above. Specific embodiments are used herein to explain the principles and implementations of the present application. The description of the above embodiments is only used to help understand the method of the present application and its core idea. At the same time, for those ordinarily skilled in the art, according to the idea of the present application, there will be changes in the specific implementation and application scope. In summary, the content of this specification should not be understood as limiting of the present application.

**Claims**

1. A control method for a hybrid vehicle, wherein the hybrid vehicle is equipped with a pure electric mode and a hybrid mode, and the method comprises:

   acquiring, when the hybrid vehicle operates in a pure electric mode, a first temperature value for an electric power source of the hybrid vehicle and a second temperature value for a current ambient environment;
   determining a first battery energy value corresponding to the first temperature value and a second battery energy value corresponding to the second temperature value from a first preset relationship; wherein the first preset relationship is a minimum remaining battery energy value set for the hybrid vehicle that the electric power source needs to have under different ambient environment temperatures/different electric power source temperatures; and
   taking a minimum battery energy value of the first battery energy value and the second battery energy value as an exit battery energy value of the pure electric mode, and controlling the hybrid vehicle to exit the pure electric mode and activate the hybrid mode when it is detected that an actual remaining battery energy value of the electric power source is not higher than the exit battery energy value.

2. The method according to claim 1, wherein the method further comprises:

   determining a target temperature interval to which the second temperature value belongs;
   determining a third temperature value from the first temperature value and the second temperature value according to the target temperature interval;
   determining a third battery energy value corresponding to the third temperature value from a second preset relationship; wherein the second preset relationship is a correspondence relationship between a temperature value and a battery energy value;
   when determining the exit battery energy value, the method further comprises:
   taking a greater battery energy value of the minimum battery energy value and the third battery energy value as the exit battery energy value of the pure electric mode.

3. The method according to claim 2, wherein the determining the third temperature value from the first temperature value and the second temperature value according to the target temperature interval comprises:

   taking, when the target temperature interval is a first temperature interval, a smaller temperature value of the first temperature value and the second temperature value as the third temperature value;
   taking, when the target temperature interval is a second temperature interval, a greater temperature value of the first temperature value and the second temperature value as the third temperature value; and
   taking, when the target temperature interval is a third temperature interval, the second temperature value as the third temperature value;
   wherein the first temperature interval is less than a first preset temperature value, the second temperature interval is greater than a second preset temperature value, and the third temperature interval is between the first preset temperature value and the second preset temperature value; and the first preset temperature value is less than the second preset temperature value.

4. The method according to claim 2 or 3, wherein the determining the third battery energy value corresponding to the third temperature value from the second preset relationship comprises:

   determining a fourth battery energy value corresponding to the third temperature value from the second preset relationship; and
   determining the third battery energy value according to the fourth battery energy value and a preset offset value.

**5.** The method according to any one of claims 2 to 4, wherein the second preset relationship comprises the following parts:

a temperature value is less than a third preset temperature value, and in the second preset relationship, a battery energy value corresponding to the temperature value increases as the temperature value decreases;
the temperature value is greater than a fourth preset temperature value, and in the second preset relationship, the battery energy value corresponding to the temperature value increases as the temperature value increases; and
the temperature value is between the third preset temperature value and the fourth preset temperature value, and in the second preset relationship, the battery energy value corresponding to the temperature value is a unique preset fixed value; and
wherein the third preset temperature value is less than the fourth preset temperature value.

**6.** The method according to any one of claims 2 to 5, wherein the taking the greater battery energy value of the minimum battery energy value and the third battery energy value as the exit battery energy value of the pure electric mode comprises:

determining whether the first battery energy value is greater than the second battery energy value;
taking, when the first battery energy value is greater than the second battery energy value, a greater battery energy value of the second battery energy value and the third battery energy value as the exit battery energy value of the pure electric mode;
taking, when the first battery energy value is not greater than the second battery energy value, a greater battery energy value between the first battery energy value and the third battery energy value as the exit battery energy value of the pure electric mode.

**7.** The method according to any one of claims 1 to 6, wherein the first preset relationship comprises a first sub-preset relationship and a second sub-preset relationship;

the first sub-preset relationship is a minimum remaining battery energy value set for the hybrid vehicle that the electric power source needs to have under different electric power source temperatures;
the second sub-preset relationship is a minimum remaining battery energy value set for the hybrid vehicle that the electric power source needs to have under different ambient environment temperatures; and
wherein under a same temperature value, a corresponding battery energy value in the second sub-preset relationship is less than a corresponding battery energy value in the first sub-preset relationship.

**8.** The method according to any one of claims 1 to 7, wherein the hybrid vehicle is equipped with a first temperature sensor for the electric power source and a first temperature sensor for ambient environment around the vehicle;
the acquiring the first temperature value for the electric power source of the hybrid vehicle and the second temperature value for the current ambient environment comprises:
acquiring the first temperature value measured for the electric power source from the first temperature sensor, and acquiring the second temperature value for the current environment from the second temperature sensor.

**9.** The method according to any one of claims 1 to 8, wherein the hybrid vehicle is equipped with a thermal power source, and the controlling the hybrid vehicle to exit the pure electric mode and activate the hybrid mode comprises:
activating the thermal power source.

**10.** A control apparatus for a hybrid vehicle, wherein the hybrid vehicle is equipped with a pure electric mode and a hybrid mode, and the apparatus comprises:

a temperature acquisition module, configured to acquire a first temperature value for an electric power source of the hybrid vehicle and a second temperature value for a current ambient environment when the hybrid vehicle operates in a pure electric mode;
a first battery energy determination module, configured to determine a first battery energy value corresponding to the first temperature value and a second battery energy value corresponding to the second temperature value from a first preset relationship; wherein the first preset relationship is a minimum remaining battery energy value set for the hybrid vehicle that the electric power source needs to have under different ambient environment temperatures/different electric power source temperatures; and
a control module, configured to take a minimum battery energy value of the first battery energy value and the second battery energy value as an exit battery energy value of the pure electric mode, and control the hybrid vehicle to exit the pure electric mode and activate the hybrid mode when it is detected that an actual remaining battery energy value of the electric power source is not higher than the exit battery energy value.

11. The apparatus according to claim 10, further comprising:

    a second battery energy value determination module, configured to: determine a target temperature interval to which the second temperature value belongs; determine a third temperature value from the first temperature value and the second temperature value according to the target temperature interval; determine a third battery energy value corresponding to the third temperature value from a second preset relationship; wherein the second preset relationship is a correspondence relationship between a temperature value and a battery energy value; the control module is further configured to take a greater battery energy value between the minimum battery energy value and the third battery energy value as the exit battery energy value of the pure electric mode when determining the exit battery energy value.

12. The apparatus according to claim 11, wherein the second battery energy value determination module is configured to: take a smaller temperature value of the first temperature value and the second temperature value as the third temperature value when the target temperature interval is a first temperature interval; take a greater temperature value of the first temperature value and the second temperature value as the third temperature value when the target temperature interval is a second temperature interval; and take the second temperature value as the third temperature value when the target temperature interval is a third temperature interval; wherein the first temperature interval is less than a first preset temperature value, the second temperature interval is greater than a second preset temperature value, and the third temperature interval is between the first preset temperature value and the second preset temperature value; and the first preset temperature value is less than the second preset temperature value.

13. The apparatus according to claim 11 or 12, wherein the second battery energy value determination module is configured to determine a fourth battery energy value corresponding to the third temperature value from the second preset relationship, and determine the third battery energy value according to the fourth battery energy value and a preset offset value.

14. The apparatus according to any one of claims 11 to 13, wherein the second preset relationship comprises the following parts:

    a temperature value is less than a third preset temperature value, and in the second preset relationship, a battery energy value corresponding to the temperature value increases as the temperature value decreases;
    the temperature value is greater than a fourth preset temperature value, and in the second preset relationship, the battery energy value corresponding to the temperature value increases as the temperature value increases; and
    the temperature value is between the third preset temperature value and the fourth preset temperature value, and in the second preset relationship, the battery energy value corresponding to the temperature value is a unique preset fixed value;
    wherein the third preset temperature value is less than the fourth preset temperature value.

15. The apparatus according to any one of claims 11 to 14, wherein the control module is configured to: determine whether the first battery energy value is greater than the second battery energy value; take a greater battery energy value of the second battery energy value and the third battery energy value as the exit battery energy value of the pure electric mode when the first battery energy value is greater than the second battery energy value; take a greater battery energy value of the first battery energy value and the third battery energy value as the exit battery energy value of the pure electric mode when the first battery energy value is not greater than the second battery energy value.

16. The apparatus according to any one of claims 10 to 15, wherein the first preset relationship includes a first sub-preset relationship and a second sub-preset relationship;

    the first sub-preset relationship is a minimum remaining battery energy value set for the hybrid vehicle that the electric power source needs to have under different electric power source temperatures;
    the second sub-preset relationship is a minimum remaining battery energy value set for the hybrid vehicle that the electric power source needs to have under different ambient environment temperatures;
    wherein under the same temperature value, a corresponding battery energy value in the second sub-preset relationship is less than a corresponding battery energy value in the first sub-preset relationship.

**17.** The apparatus according to any one of claims 10 to 16, wherein the hybrid vehicle is equipped with a first temperature sensor for the electric power source and a first temperature sensor for ambient environment around the vehicle; and
the temperature acquisition module is configured to acquire the first temperature value measured for the electric power source from the first temperature sensor, and to acquire the second temperature value for the current ambient environment from the second temperature sensor.

**18.** The apparatus according to any one of claims 10 to 17, wherein the hybrid vehicle is equipped with a thermal power source, and the control module is configured to activate the thermal power source.

**19.** A vehicle, comprising a processor, a memory, and a computer program stored in the memory and capable of running on the processor, wherein when the computer program is executed by the processor, the control method for the hybrid vehicle according to any one of claims 1 to 9 is implemented.

**20.** A computer-readable storage medium, wherein the computer-readable storage medium stores a computer program, and when the computer program is executed by a processor, the control method for the hybrid vehicle according to any one of claims 1 to 9 is implemented.

**21.** A computer program, comprising program codes, wherein when a computer runs the computer program, the program codes execute the method according to any one of claims 1 to 9.

EP 4 691 870 A1

| | 101 |
|---|---|
| When a hybrid vehicle operates in a pure electric mode, acquiring a first temperature value for an electric power source of the hybrid vehicle and a second temperature value for a current ambient environment | |

| | 102 |
|---|---|
| Determining a first battery energy value corresponding to the first temperature value and a second battery energy value corresponding to the second temperature value from a first preset relationship; where the first preset relationship is a minimum remaining battery energy value set for the hybrid vehicle that the electric power source needs to have under different ambient environment temperatures/different electric power source temperatures | |

| | 103 |
|---|---|
| Taking a minimum battery energy value of the first battery energy value and the second battery energy value as an exit battery energy value of the pure electric mode, and controlling the hybrid vehicle to exit the pure electric mode and activate a hybrid mode when it is detected that an actual remaining battery energy value of the electric power source is not higher than the exit battery energy value | |

FIG. 1

When a hybrid vehicle operates in a pure electric mode, acquiring a first temperature value for an electric power source of the hybrid vehicle and a second temperature value for a current ambient environment 201

Determining a first battery energy value corresponding to the first temperature value and a second battery energy value corresponding to the second temperature value from a first preset relationship 202

Determining a target temperature interval to which the second temperature value belongs 203

Determining a third temperature value from the first temperature value and the second temperature value according to the target temperature interval 204

Determining a third battery energy value corresponding to the third temperature value from a second preset relationship; where the second preset relationship is a correspondence relationship between a temperature value and a battery energy value 205

Taking a greater battery energy value of the minimum battery energy value and the third battery energy value as an exit battery energy value of the pure electric mode, and controlling the hybrid vehicle to exit the pure electric mode and activate the hybrid mode when it is detected that an actual remaining battery energy value of the electric power source is not higher than the exit battery energy value 206

FIG. 2

Acquiring $T_{amb}$ and $T_{batt}$

$T_{amb} < T0$ → Yes → $T_{comb} = \min (T_{amb}, T_{batt})$

No

$T_{amb} > T_1$ → Yes → $\max (T_{amb}, T_{batt})$

No

$T_{comb} = T_{batt}$

FIG. 3

Battery energy value / %

Temperature value / °C

First part

Third part

Second part

Third preset temperature value

Fourth preset temperature value

FIG. 4

FIG. 5

FIG. 6

## INTERNATIONAL SEARCH REPORT

| International application No. |
|---|
| **PCT/CN2024/075602** |

| A. | CLASSIFICATION OF SUBJECT MATTER |
|---|---|
| | B60W20/20(2016.01)i; B60W20/40(2016.01)i |

According to International Patent Classification (IPC) or to both national classification and IPC

| B. | FIELDS SEARCHED |
|---|---|

Minimum documentation searched (classification system followed by classification symbols)

IPC: B60W, B60L

Documentation searched other than minimum documentation to the extent that such documents are included in the fields searched

Electronic data base consulted during the international search (name of data base and, where practicable, search terms used)

CNKI, CNTXT, WPABS, ENTXT, ENTXTC: 混合动力, 环境温度, 剩余电量, 电量, 温度; hybrid, ambient temperature, SOC, state of charge, charge, temperature

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116279405 A (CHONGQING CHANG'AN AUTOMOBILE CO., LTD.) 23 June 2023 (2023-06-23) claims 1-20, and description, paragraphs 0074-0205, and figures 1-6 | 1-21 |
| A | CN 113135175 A (GREAT WALL MOTOR COMPANY LIMITED) 20 July 2021 (2021-07-20) entire document | 1-21 |
| A | CN 111032465 A (RENAULT S.A.S.) 17 April 2020 (2020-04-17) entire document | 1-21 |
| A | CN 112810600 A (BYD CO., LTD.) 18 May 2021 (2021-05-18) entire document | 1-21 |
| A | WO 2022042604 A1 (BYD CO., LTD.) 03 March 2022 (2022-03-03) entire document | 1-21 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **14 May 2024** | **24 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/075602**

| Patent document cited in search report | | | Publication date (day/month/year) | Patent family member(s) | | | Publication date (day/month/year) |
|---|---|---|---|---|---|---|---|
| CN | 116279405 | A | 23 June 2023 | None | | | |
| CN | 113135175 | A | 20 July 2021 | None | | | |
| CN | 111032465 | A | 17 April 2020 | JP | 2020531358 | A | 05 November 2020 |
| | | | | US | 2020331452 | A1 | 22 October 2020 |
| | | | | US | 11807213 | B2 | 07 November 2023 |
| | | | | JP | 2023164788 | A | 14 November 2023 |
| | | | | EP | 3676145 | A1 | 08 July 2020 |
| | | | | FR | 3070346 | A1 | 01 March 2019 |
| | | | | FR | 3070346 | B1 | 01 January 2021 |
| | | | | KR | 20200043408 | A | 27 April 2020 |
| | | | | KR | 102581332 | B1 | 25 September 2023 |
| | | | | WO | 2019042818 | A1 | 07 March 2019 |
| CN | 112810600 | A | 18 May 2021 | None | | | |
| WO | 2022042604 | A1 | 03 March 2022 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310340353